# EUROPÄISCHE PATENTSCHRIFT

(11) **EP 0 980 788 B1**
(45) Veröffentlichungstag und Bekanntmachung des Hinweises auf die Patenterteilung: **17.12.2003**
(21) Anmeldenummer: 99115800.7
(22) Anmeldetag: 11.08.1999
(51) Int. Cl.: B60Q 1/26, F21S 8/10

(54) **Fahrzeugleuchte**
Vehicle light
Feux pour véhicule

(30) Priorität: 19.08.1998 DE 19837553
(43) Veröffentlichungstag der Anmeldung: 23.02.2000
(73) Patentinhaber: Hella KG Hueck & Co., 59552 Lippstadt (DE)
(72) Erfinder: Lammert, Thomas, 59590 Geseke (DE); Schröder, Stephan, 59557 Lippstadt (DE)

(56) Entgegenhaltungen:
- EP-A- 0 531 184
- EP-A- 0 633 163
- US-A- 5 519 596

## Beschreibung

Die Erfindung betrifft eine Fahrzeugleuchte mit einer Mehrzahl von sich in unterschiedlichen Ebenen erstreckenden Trägerplatten, auf dessen Oberseiten jeweils eine Mehrzahl von Leuchtdioden angeordnet sind, die in Richtung einer Gehäusevorderseite eines Gehäuses abstrahlen, und mit mindestens einem auf der Trägerplatte angeordneten elektrischen Anschluß für eine elektrische Versorgung der Leuchtdioden.

Aus der EP 0 633 163 A1 ist eine gattungsgemäße Fahrzeugleuchte bekannt, bei der auf einer Mehrzahl von ebenen Trägerplatten eine Mehrzahl von Leuchtdioden angeordnet ist, die in Richtung einer Gehäusevorderseite eines Gehäuses abstrahlen. Die elektrischen Anschlüsse der auf der Trägerplatte zusammengeschalteten Leuchtdioden ist vorzugsweise in einem Randbereich angeordnet. Über flexible Leitungen kann ein elektrischer Anschluß einer ersten Trägerplatte mit einem elektrischen Anschluß einer zweiten Trägerplatte verbunden sein.

Nachteilig bei der bekannten Fahrzeugleuchte ist, daß die elektrische Verbindung zwischen den elektrischen Anschlüssen mehrerer Trägerplatten durch einzelne Leitungen erfolgt, die sich seitlich neben der Trägerplatte erstrecken.

Aus der DE 196 49 722 A1 ist eine Fahrzeugleuchte bekannt, bei der eine Trägerplatte mit einer Mehrzahl von Leuchtdioden mehrere, jeweils einer elektrischen Zuführleitung zugeordnete Steckverbinder aufweist, in denen Kontakte eines Lampenhalters rastend gehalten sind. Nachteilig an dieser bekannten Fahrzeugleuchte ist, daß für jede elektrische Zuleitung ein separater Steckverbinder auf der Trägerplatte angeordnet sein muß.

Aufgabe der vorliegenden Erfindung ist es daher, eine Fahrzeugleuchte derart auszubilden, daß sie bei geringem Platzbedarf einfach und kostengünstig montiert werden kann.

Diese Aufgabe wird erfindungsgemäß dadurch gelöst, daß die elektrischen Anschlüsse der Trägerplatten über einen zumindest bereichsweise flexibel ausgebildeten Anschlußverbinder miteinander elektrisch verbunden sind, wobei sich der Anschlußverbinder jeweils entlang einer flächigen Ober- und/oder Unterseite der Trägerplatten erstreckt.

Dadurch, daß sich der Anschlußverbinder entlang einer Ober- und/oder Unterseite der jeweiligen Trägerplatten erstreckt, ist die elektrische Stromzuführung platzsparend im Bereich der Trägerplatten angeordnet. Dabei wird ausgenutzt, daß die reihenförmig angeordneten Leuchtdioden zueinander beabstandet sind. Da der Anschlußverbinder mehrere Zuführleitungen umfaßt, kann die elektrische Zuführung von der Batterie an einem elektrischen Anschluß einer randseitigen Trägerplatte erfolgen. Durch die bereichsweise flexible Ausbildung des Anschlußverbinders kann sich dieser einer beliebigen relativen Anordnung der Trägerplatten zueinander anpassen.

Nach einer bevorzugten Ausführungsform der Erfindung ist der Anschlußverbinder einstückig ausgebildet und erstreckt sich in langgestreckter Form entlang einer Reihe von versetzt zueinander angeordneten Trägerplatten. In einem Bereich zwischen benachbarter Trägerplatten erstreckt sich der Anschlußverbinder unter mindestens einer Umlenkung entlang eines spitzen Winkels, so daß die in Reihe angeordneten Trägerplatten auch mechanisch miteinander verbunden sind. Die so gebildete zusammenhängende Trägerplattenanordnung erleichtert die Handhabung beim Einsetzen der Trägerplatten in die Leuchte. Die Montage kann dadurch erheblich vereinfacht werden. Eine weitere Vereinfachung der Montage ergibt sich aus der einstückigen Ausbildung des Anschlußverbinders. Erfindungsgemäß ist lediglich eine üblicherweise mehrpolige Verbindungstelle je Trägerplatte vorgesehen, so daß wenige Montagevorgänge erforderlich sind.

Nach einer weiteren bevorzugten Ausführungsform weist der Anschlußverbinder eine Mehrzahl von jeweils einem elektrischen Anschluß der Trägerplatte zugeordneten Steckverbinder auf, der an Kontaktstellen des elektrischen Anschlusses kontaktierbar ist. Vorteilhaft wird die Kontaktierung durch Verlötung erreicht, wobei dieser Fertigungsschritt einfach in den Verlötungsprozeß der mit Bauelementen bestückten Trägerplatte integriert werden kann.

Nach einer besonderen Ausführungsform der Erfindung weist der Steckverbinder ein Gehäuse mit einer auf einer der Trägerplatte zugewandten Seite angeordneten Haltenase auf, die in eine Aufnahme der Trägerplatte klemmend gehaltert ist. Hierdurch kann vorteilhaft eine Positionierung des Steckverbinders bezüglich des elektrischen Anschlusses der Trägerplatte erzielt werden, so daß nachfolgend eine sichere elektrische Kontaktierung mittels Löten erfolgen kann.

Weitere Einzelheiten der Erfindung ergeben sich aus der nachfolgenden Beschreibung und den beigefügten Zeichnungen, in denen ein bevorzugtes Ausführungsbeispiel der Erfindung veranschaulicht ist.

In den Zeichnungen zeigen:
- Figur 1:: Eine Draufsicht auf eine Fahrzeugleuchte im Schnitt,

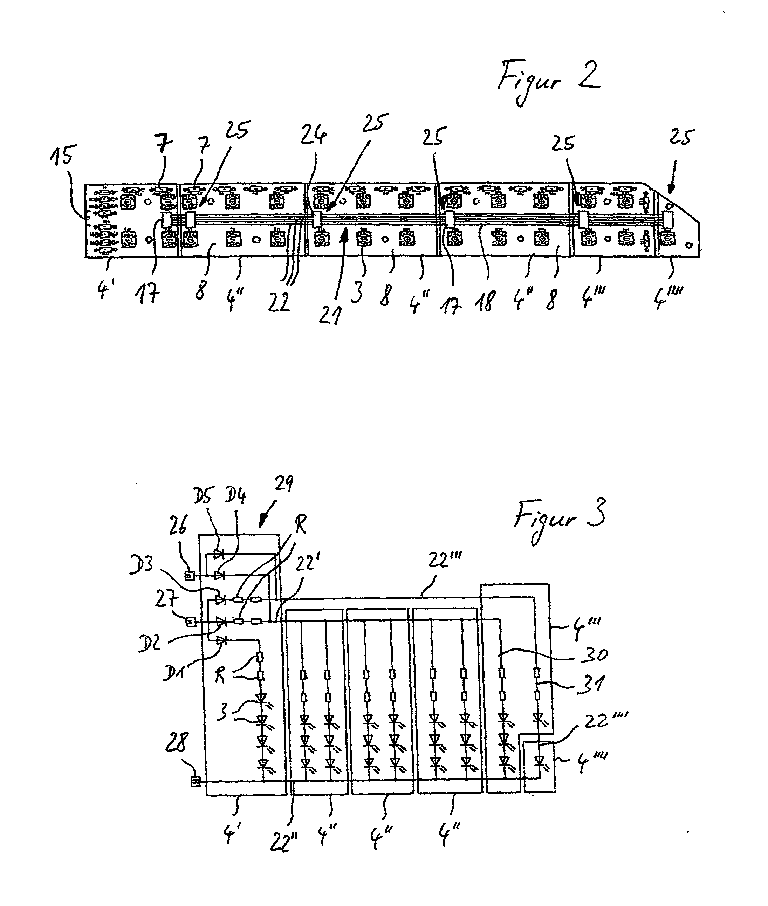

- Figur 2:: eine Ansicht der Oberseite einer Mehrzahl von Trägerplatten,
- Figur 3:: einen Schaltplan von auf Trägerplatten angeordneten Leuchtdioden und
- Figur 4:: eine Einzelheit X gemäß Figur 1.

Eine Fahrzeugleuchte (1) besteht im wesentlichen aus einem Gehäuse (2), in dem eine Mehrzahl von mit Leuchtdioden (3) bestückte Trägerplatten (4) angeordnet sind. Die Fahrzeugleuchte (1) kann als Heckleuchte mit vorzugsweise Bremsund/oder Schlußlicht ausgebildet sein.

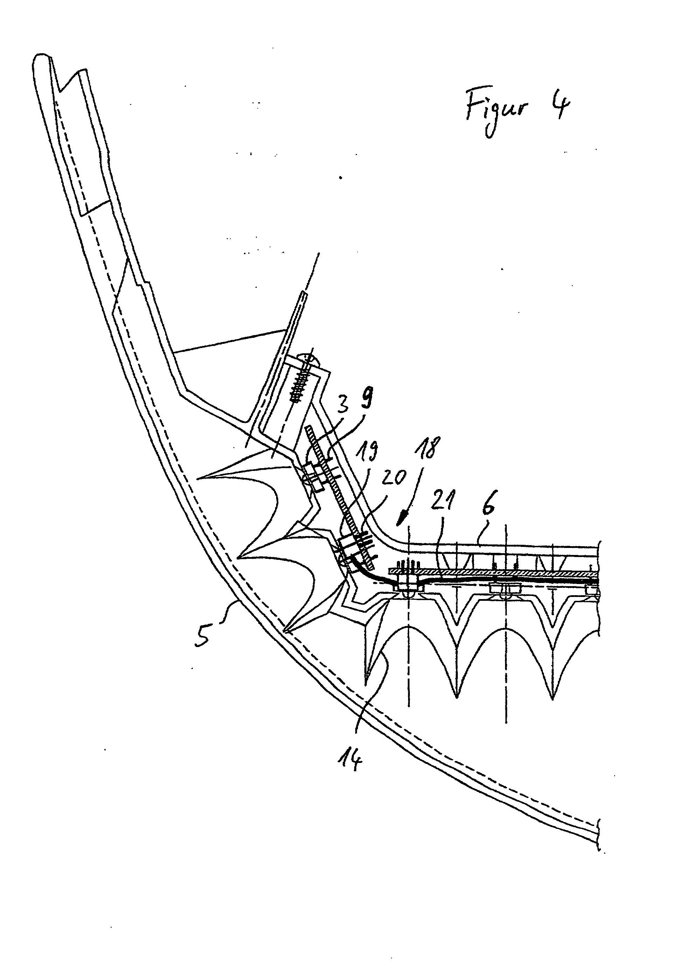

Das Gehäuse (2) ist im wesentlichen aus einer in Abstrahlrichtung der Leuchtdioden (3) vom liegenden Gehäusevorderseite (5) und aus einer der Gehäusevorderseite (5) abgewandten Gehäuserückseite (6) gebildet. Die Gehäusevorderseite (5) ist als transparente Abdeckscheibe ausgebildet. Zwischen der Gehäusevorderseite (5) und der Gehäuserückseite (6) erstrecken sich die stufenförmig angeordneten Trägerplatten (4), die jeweils als Leiterplatte ausgebildet sind und neben den Leuchtdioden (3) mit Widerständen (7) bestückt sind. Die Trägerplatten (4) sind mit einer Oberseite (8) zu der Gehäusevorderseite (5) hin orientiert. Auf der Oberseite (8) sind in regelmäßigen Abständen eine Mehrzahl von Leuchtdioden (3) angeordnet. Die Leuchtdioden (3) sind mit Füßen (9) auf der Trägerplatte (4) verlötet. Auf einer der Gehäuserückseite (6) zugewandten Unterseite (10) erstrecken sich Leiterbahnen, die nach dem in Figur 3 dargestellten Schaltplan verlaufen.

Die Trägerplatten (4) sind mit den Leuchtdioden (3) zwischen einer Lichtstreueinheit (11) und der Gehäuserückseite (6) lösbar gehaltert. Zu diesem Zweck weist die Lichtstreueinheit (11) nach hinten abragende Stege (12) auf, in die jeweils eine Schraube (13) von der Gehäuserückseite (6) her eingreifbar ist. Die Lichtstreueinheit (11) weist jeweils trichterförmig ausgebildete Lichtstreuelemente(14) auf, die jeweils einer Leuchtdiode (3) zugeordnet sind.

Die Trägerplatten (4) sind im wesentlichen langgestreckt ausgebildet, und erstrecken sich versetzt zueinander in parallelen Ebenen. Alternativ dazu können sich die Trägerplatten (4) auch in einem Winkel versetzt zueinander erstrecken. Nach dem vorliegenden Ausführungsbeispiel ist zumindest eine randseitige Trägerplatte (4') in einem Winkel zu der benachbarten Trägerplatte (4) ausgebildet. Diese randseitige Trägerplatte (4') weist in einem zu der benachbarten Trägerplatte (4) abgewandten Randbereich Kontaktstellen (15) auf, mit denen ein nicht dargestellter und mit der Batterie verbundener Stecker kontaktierbar ist.

In einem zu der benachbarten Trägerplatte (4) zugewandten Randbereich der randseitigen Trägerplatte (4') sind weitere Kontaktstellen vorgesehen, mit denen ein Steckverbinder (17) eines Anschlußverbinders (18) elektrisch verbindbar ist. Zu diesem Zweck wird eine Anzahl von aus einem Gehäuse (19) des Steckverbinders (17) abragenden Anschlußstiften (20) in eine Bohrung der Trägerplatte (4) geführt und nachfolgend durch Verlöten an der Kontaktstelle mit dieser elektrisch verbunden.

An den Steckverbinder (17) schließt sich ein Kabel (21) in Richtung der weiteren sich anschließenden Trägerplatte (4) an. Zwischen den benachbarten Trägerplatten (4) ist ein stufenförmiger Abschnitt des Kabels (21) gebildet. Zur elektrischen Verbindung der Anschlußstifte (20) mit korrespondierenden Leitungen (22) des Kabels (21) weist der Steckverbinder (17) eine Anzahl von zu den Anschlußstiften (20) korrespondierenden Schneidkontakten auf, die jeweils in die korrespondierenden Leitungen (22) einschneid- und klemmbar sind. Die Schneidkontakte sind einstückig mit den Anschlußstiften (20) verbunden und bestehen aus einem elektrisch leitenden Metallwerkstoff. Zur Vermeidung eines Kurzschlusses sind die benachbarten Leitungen (22) durch versetzt zueinander angeordnete Schneidkontakte beaufschlagt. Nach klemmendem Durchstecken der Schneidkontakte durch die einen metallischen Leiter aufweisenden Leitungen (22) wird ein Gehäusedeckel (24) aufgesetzt, so daß die Schneidkontakte nach oben hin abgedeckt sind.

Beginnend von dem in der randseitigen Trägerplatte (4') positionierten Steckverbinder (17) setzt sich der Anschlußverbinder (18) mit dem als durchgehend ausgebildeten Kabel (21) bis zu einem elektrischen Anschluß (25) einer am Ende der Reihe angeordneten Trägerplatte (4) fort. Die nachfolgenden Trägerplatten (4) weisen jeweils einen einzigen elektrischen Anschluß (25) auf, zu dem mittels des Steckverbinders (17) der elektrische Strom von dem Kabel (21) abgezweigt bzw. die elektrische Stromversorgung bereitgestellt wird.

Das Kabel (21) ist als Flachkabel mit einer Anzahl von nebeneinander angeordneten und voneinander isolierten Leitern bzw. Leitungen (22) ausgebildet. Das Kabel (21) ist flexibel ausgebildet und kann sich an die Form der zueinander angeordneten Trägerplatten (4) anpassen. Die Steckverbinder (17) brauchen erst mit dem Kabel (21) verbunden werden, sobald feststeht, wie die Trägerplatten (4) zueinander angeordnet sind. Insofern kann eine flexible und an die Anordnung der Trägerplatten (4) angepaßte elektrische Stromzuführung gewährleistet sein.

Das Kabel (21) erstreckt sich vorteilhaft platzsparend gradlinig zwischen zwei Reihen von Leuchtdioden (3). Vorzugsweise liegt das Kabel (21) auf der Oberseite (8) der Trägerplatten (4) an. Lediglich in einem Bereich zwischen zwei benachbarten Trägerplatten (4) erfährt das Kabel (21) eine dem Rand der jeweiligen Trägerplatte (4) zugeordnete Umlenkung um einen spitzen Winkel.

Um die Montage des Steckverbinders (17) an die Trägerplatte (4) zu erleichtern, weist das Gehäuse (19) desselben eine auf der zu der Trägerplatte (4) zugekehrten Seite eine nicht dargestellte Haltenase auf, mittels der der Steckverbinder (17) in einer Bohrung der Trägerplatte (4) positioniert werden kann und gegen Verdrehung gesichert werden kann. Danach können die Anschlußstifte (20) zusammen mit den weiteren Bauteilen der Trägerplatte (4) in einem einzigen Lötprozeß elektrisch kontaktiert werden.

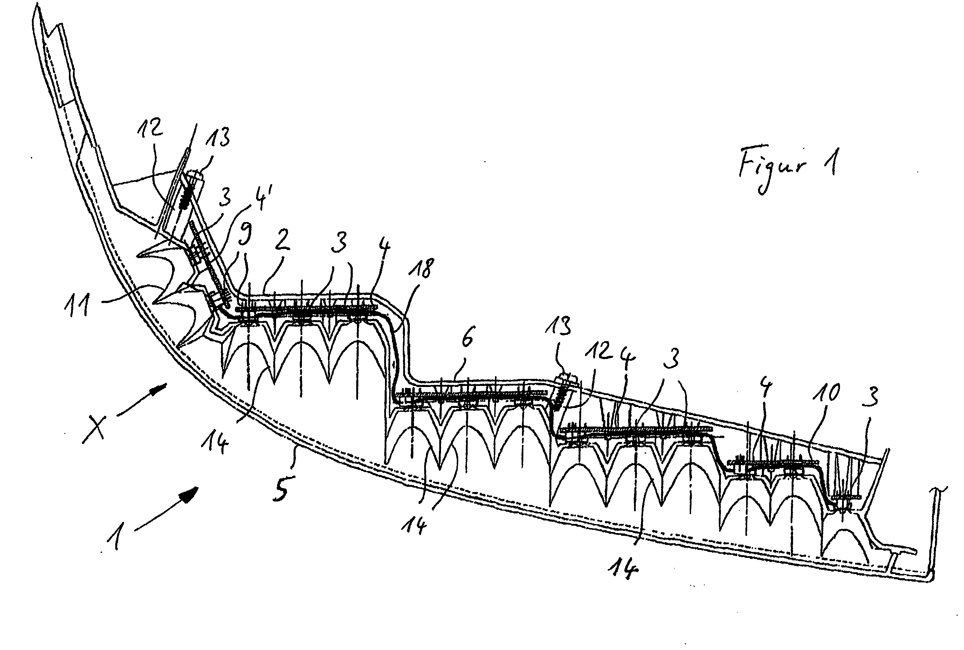

Wie aus Figur 1 zu ersehen ist, kann die randseitige Trägerplatte (4') mit ihren Leuchtdioden (3) als Seitenmarkierungslicht eingesetzt werden. Die auf den weiteren sich anschließenden Trägerplatten (4) befindlichen Leuchtdioden (3) können als Bremslicht und/oder Schlußlicht eingesetzt werden. Zu diesem Zweck weist das Kabel (21) vier Leitungen (22) auf, so daß eine Schaltkombination gemäß Figur 3 erzielbar ist. Der elektrische Anschluß (25) der Trägerplatte (4') ist an seiner randseitigen ersten Kontaktstelle (15) mit einer Plus-Zuleitung (26) des Bremslichtes, mit einer Plus-Zuleitung (27) des Schlußlichtes und mit einer Minuszuleitung (28) verbunden. Über eine Diode D1 ist die Plus-Zuleitung (27) direkt mit der aus vier in Reihe geschalteten Leuchtdioden (3) einerseits und zwei in Reihe geschalteten Widerständen R andererseits bestehenden Diodenschaltung verbunden. Über die Minuszuleitung (28) ist die Diodenschaltung mit der Masse der nicht dargestellten Batterie verbunden. Infolgedessen kommt diesen Leuchtdioden (3) ausschließlich eine Schlußlichtfunktion zu und kann als Seitenmarkierungslicht dienen.

Die Trägerplatte (4') weist darüberhinaus eine Auswahlschaltung (29) auf, die eine Ansteuerung der auf den weiteren Trägerplatten (4", 4"', 4"") befindlichen Leuchtdioden (3) als Schlußlicht und/oder Bremslicht ermöglicht. Im vorliegenden Ausführungsbeispiel sind die mittleren Leuchtdioden (3) der Trägerplatten (4") parallel geschaltet und über eine Leitung (22') mit der Plus-Zuleitung (26) oder Plus-Zuleitung (27) verbindbar. Ferner sind sie über die Leitung (22") mit der Minus-Zuleitung (28) verbunden, so daß insgesamt zwei Leitungen (22', 22") des Kabels (21) erforderlich sind.

Die endseitige Trägerplatte (4"') erfordert vier Zuleitungen, damit die darauf befindlichen Leuchtdioden (3) sowohl als Bremslicht als auch als Schlußlicht einsetzbar sind und damit eine Leuchtdiode (3), die sich auf einer abschließenden Trägerplatte (4"") befindet, mit einem Zweig der auf der Trägerplatte (4''') der Leuchtdioden (3) koppelbar ist. Dabei ist ein linker Zweig (30) der Leuchtdioden (3) mit der Leitung (22') verbunden, während ein rechter Zweig (31) mit einer Leitung (22''') verbunden ist. Der linke Zweig (30) ist über die Leitung (22") wiederum mit der Masse (28) verbunden, während der rechte Zweig (31) über eine Leitung (22"") mit der Leuchtdiode auf der Trägerplatte (4"") verbunden ist. Diese Leuchtdiode (3) ist wiederum über die Leitung (22") mit der Masse (28) verbunden. Folglich sind für die genannte Trägerplatte (4''') vier Leitungen (22', 22", 22''', 22"") erforderlich.

Die Auswahlschaltung (29) besteht aus einer Dioden/Widerstandsschaltung, wobei der Plus-Zuleitung (26) für das Bremslicht für jede Leitung (22', 22''') eine Diode D4 bzw. D5 zugeordnet ist. Ferner enthält die Auswahlschaltung (29) eine Reihenschaltung von einer Diode D2 bzw. D3 mit jeweils zwei Widerständen R, die ebenfalls ausgangsseitig einer Leitung (22') bzw. (22"') zugeordnet sind.

Eingangsseitig sind diese Reihenschaltungen der Plus-Zuleitung (27) des Schlußlichtes zugeordnet. Die Auswahlschaltung (29) ermöglicht somit in Verbindung mit dem Anschlußverbinder (18) eine wahlweise Ansteuerung der auf den Trägerplatten (4) befindlichen Leuchtdioden (3).

## Patentansprüche

1. Fahrzeugleuchte mit einer Mehrzahl von sich in unterschiedlichen Ebenen erstreckenden Trägerplatten (4,4'4",4''',4''''), auf dessen Oberseiten jeweils eine Mehrzahl von Leuchtdioden (3) angeordnet ist, die in Richtung einer Gehäusevorderseite eines Gehäuses (2) abstrahlen und mit mindestens einem auf der Trägerplatte angeordneten elektrischen Anschluß für eine elektrische Versorgung der Leuchtdioden (3), **dadurch gekennzeichnet, daß** die elektrischen Anschlüsse der Trägerplatten über einen zumindest bereichsweise flexibel ausgebildeten Anschlußverbinder (18) miteinander elektrisch verbunden sind, wobei sich der Anschlußverbinder (18) jeweils entlang einer flächigen Ober- und/oder Unterseite (8, 10) der Trägerplatten (4, 4', 4", 4''', 4"") erstreckt.

2. Fahrzeugleuchte nach Anspruch 1, **dadurch gekennzeichnet, daß** der Anschlußverbinder (18) einstückig ausgebildet ist und sich entlang einer Reihe von zueinander angeordneten Trägerplatten (4, 4', 4", 4"', 4"") fortlaufend erstreckt unter Bildung eines stufenförmigen Abschnitts zwischen zwei benachbarten Trägerplatten (4, 4', 4", 4''', 4"").

3. Fahrzeugleuchte nach Anspruch 1 oder 2, **dadurch gekennzeichnet, daß** der Anschlußverbinder (18) eine Mehrzahl von jeweils einem elektrischen Anschluß (25) der Trägerplatten (4, 4', 4", 4''', 4"") zugeordneten Steckverbinder (17) aufweist, der an Kontaktstellen des elektrischen Anschlusses (25) kontaktierbar ist.

4. Fahrzeugleuchte nach einem der Ansprüche 1 bis 3, **dadurch gekennzeichnet, daß** der Anschlußverbinder (18) ein zu den Kontaktstellen des elektrischen Anschlusses (25) korrespondierende Anzahl voneinander isolierter elektrischer Leitungen (22, 22', 22", 22''', 22"") bestehendes Kabel (21) aufweist, mit dem die voneinander beabstandeten Steckverbinder (17) formschlüssig verbunden sind.

5. Fahrzeugleuchte nach einem der Ansprüche 1 bis 4, **dadurch gekennzeichnet, daß** der Steckverbinder (17) mehrere zu jeweils einer Leitung (22, 22', 22", 22''', 22"") des Kabels (21) korrespondierende Schneidkontakte aufweist, die jeweils durch die korrespondierende Leitung (22, 22', 22", 22''', 22"") durchsteckbar sind zur klemmenden Kontaktierung mit denselben.

6. Fahrzeugleuchte nach einem der Ansprüche 1 bis 5, **dadurch gekennzeichnet, daß** der Schneidkontakt einstückig mit einem Anschlußstift (20) verbunden ist, wobei der Anschlußstift (20) in eine vorgegebene Bohrung der Trägerplatte (4, 4', 4", 4''', 4"") einsteckbar und durch Verlötung mit auf der Trägerplatte (4, 4', 4", 4''', 4"") angeordneten Leiterbahnen elektrisch verbindbar ist.

7. Fahrzeugleuchte nach einem der Ansprüche 1 bis 6, **dadurch gekennzeichnet, daß** die Schneidkontakte und/oder die Anschlußsstifte (20) in einem Gehäuse (19) gelagert sind und daß das Gehäuse (19) auf einer der Trägerplatte (4, 4', 4", 4''', 4"") zugekehrten Seite eine Haltenase aufweist zu klemmenden Halterung in einer korrespondierenden Aufnahme der Trägerplatte (4, 4', 4", 4"', 4"").

8. Fahrzeugleuchte nach einem der Ansprüche 1 bis 7, **dadurch gekennzeichnet, daß** das Kabel (21) als Flachkabel ausgebildet ist.

9. Fahrzeugleuchte nach einem der Ansprüche 1 bis 8, **dadurch gekennzeichnet, daß** sich der Anschlußverbinder (18) auf der Oberseite (8) der Trägerplatte (4, 4', 4", 4''', 4"") in Längsrichtung derselben erstreckt und daß sich der Anschlußverbinder (18) entlang eines mittleren Bereiches der Trägerplatte (4, 4', 4", 4''', 4"") zwischen zwei Reihen von Leuchtdioden (3) erstreckt.

10. Fahrzeugleuchte nach einem der Ansprüche 1 bis 9, **dadurch gekennzeichnet, daß** den auf den Trägerplatten (4, 4', 4", 4"', 4"") angeordneten Leuchtdioden (3) eine Auswahlschaltung (29) vorgelagert ist, mittels derer einen oder mehreren Leuchtdioden (3) einer Trägerplatte (4, 4', 4", 4''', 4"") unterschiedliche Lichtfunktionen zuordbar sind.

## Claims

1. A vehicle light comprising a multiplicity of carrier plates (4, 4', 4", 4''', 4"") which extend in different planes, on the upper faces of each of which a multiplicity of light-emitting diodes (3) is disposed, which radiate towards a housing front of a housing (2), and comprising at least one electrical terminal, which is disposed on the carrier plate, for an electrical supply to the light-emitting diodes (3), **characterised in that** the electrical terminals of the carrier plates are electrically connected to each other via a terminal connector (18) which at least regionally is of flexible construction, wherein the terminal connector (18) extends along a planar upper and/or lower face (8, 10) of each of the carrier plates (4, 4', 4", 4''', 4"").

2. A vehicle light according to claim 1, **characterised in that** the terminal connector (18) is of one-piece construction and extends continuously along a row of carrier plates (4, 4', 4", 4''', 4"") which are arranged together, with the formation of a step-like section between two adjacent carrier plates (4, 4', 4", 4''', 4"").

3. A vehicle light according to claim 1 or 2, **characterised in that** the terminal connector (18) comprises a multiplicity of pin-and-socket connectors (17) which are each associated with an electrical terminal (25) of the carrier plates (4, 4', 4", 4''', 4"") and which can make contact with contact points of the electrical terminal (25).

4. A vehicle light according to any one of claims 1 to 3, **characterised in that** the terminal connector (18) comprises a cable (21) to which the spaced-apart pin-and-socket connectors (17) are positively connected, and which consists of a number of leads (22, 22', 22", 22''', 22"") which are electrically insulated from each other, said number corresponding to the contact points of the electrical terminal (25).

5. A vehicle light according to any one of claims 1 to 4, **characterised in that** the pin-and-socket connector (17) comprises a plurality of insulation displacement contacts which each correspond to a lead (22, 22', 22", 22''', 22"") of the cable (21) and which can each be put through the corresponding lead (22, 22', 22", 22''', 22"") for insulation displacement contact with the same.

6. A vehicle light according to any one of claims 1 to 5, **characterised in that** the insulation displacement contact is joined in one piece to a connection pin (20), wherein the connection pin (20) can be inserted in a preset hole in the carrier plate (4, 4', 4", 4''', 4'''') and can be electrically connected by soldering to strip conductors disposed on the carrier plate (4, 4', 4", 4''', 4'''').

7. A vehicle light according to any one of claims 1 to 6, **characterised in that** the insulation displacement contacts and/or the connection pins (2) are mounted in a housing (19), and that on a side facing the carrier plate (4, 4', 4", 4''', 4'''') the housing (19) has a retaining lug for locking fixation in a corresponding aperture in the carrier plate (4, 4', 4", 4''', 4'''').

8. A vehicle light according to any one of claims I to 7, **characterised in that** the cable (21) is formed as a flat cable.

9. A vehicle light according to any one of claims 1 to 8, **characterised in that** the terminal connector (18) extends on the upper face (8) of the carrier plate (4, 4', 4", 4"', 4"") in the longitudinal direction of the same, and that the terminal connector (18) extends along a central region of the carrier plate (4, 4', 4", 4''', 4"") between two rows of light-emitting diodes (3).

10. A vehicle light according to any one of claims 1 to 9, **characterised in that** a selector circuit (29), by means of which different light functions can be assigned to one or more light-emitting diodes (3) of a carrier plate (4, 4', 4", 4"', 4""), is mounted in front of the light-emitting diodes (3) disposed on the carrier plates (4, 4', 4", 4''', 4"").

## Revendications

1. Feu de véhicule comportant une multitude de plaques supports (4, 4', 4", 4"', 4"") s'étendant dans différents plans, sur les faces supérieures desquelles sont agencées une multitude de diodes électroluminescentes respectives (3) qui rayonnent en direction d'une face antérieure d'un boîtier (2), et comportant au moins un branchement électrique agencé sur la plaque support pour une alimentation électrique des diodes électroluminescentes (3), **caractérisé en ce que** les branchements électriques des plaques supports sont électriquement reliés les uns aux autres via un raccord (18) réalisé flexible au moins par portions, le raccord (18) s'étendant respectivement le long d'une face supérieure (8) et/ou d'une face inférieure (10) des plaques supports (4, 4', 4", 4"', 4"").

2. Feu de véhicule selon la revendication 1, **caractérisé en ce que** le raccord (18) est réalisé d'un seul tenant et s'étend de manière continue le long d'une rangée de plaques supports (4, 4', 4", 4''', 4"") agencées les unes par rapport aux autres, en formant un tronçon étagé entre deux plaques supports (4, 4', 4", 4''', 4"") voisines.

3. Feu de véhicule selon l'une ou l'autre des revendications 1 et 2, **caractérisé en ce que** le raccord (18) présente une multitude de connecteurs (17) associés à un branchement électrique (25) respectif des plaques supports (4, 4', 4", 4"', 4""), qui peuvent être mis en contact aux points de contact du branchement électrique (25).

4. Feu de véhicule selon l'une des revendications 1 à 3, **caractérisé en ce que** le raccord (18) comporte un câble composé de lignes électriques (22, 22', 22", 22''', 22"") isolées les unes des autres, en nombre correspondant aux points de contact du branchement électrique (25), auxquelles les connecteurs (17) espacés les uns des autres sont reliés par coopération de formes.

5. Feu de véhicule selon l'une des revendications 1 à 4, **caractérisé en ce que** le connecteur (17) comporte plusieurs contacts à couteau correspondant chacun à une ligne (22, 22', 22", 22"', 22"") du câble 21, qui peuvent chacun s'enfoncer dans la ligne (22, 22', 22", 22"', 22"") pour venir en contact par serrage avec celle-ci.

6. Feu de véhicule selon l'une des revendications 1 à 5, **caractérisé en ce que** le contact à couteau est relié d'un seul tenant à une broche de connexion (20), la broche de connexion (20) pouvant être enfichée dans un perçage prédéterminé de la plaque support (4, 4', 4", 4"', 4"") et pouvant être électriquement reliée par brasage à des pistes conductrices agencées sur la plaque support (4, 4', 4", 4"', 4" ").

7. Feu de véhicule selon l'une des revendications 1 à 6, **caractérisé en ce que** les contacts à couteau et/ou les broches de connexion (20) sont logés dans un boîtier (19), et **en ce que** le boîtier (19) présente sur une face tournée vers la plaque support (4, 4', 4", 4"', 4"") un ergot de retenue pour être retenu par serrage dans un logement correspondant de la plaque support (4, 4', 4", 4"', 4"").

8. Feu de véhicule selon l'une des revendications 1 à 7, **caractérisé en ce que** le câble (21) est réalisé sous forme de câble plat.

9. Feu de véhicule selon l'une des revendications 1 à 8, **caractérisé en ce que** le raccord (18) s'étend sur la face supérieure (8) de la plaque support (4, 4', 4", 4''', 4"") en direction longitudinale de celle-ci, et **en ce que** le raccord (18) s'étend le long d'une région médiane de la plaque support (4, 4', 4", 4"', 4" ") entre deux rangées de diodes électroluminescentes (3).

10. Feu de véhicule selon l'une des revendications 1 à 9, **caractérisé en ce qu'**en amont des diodes électroluminescentes (3) agencées sur les plaques supports (4, 4', 4", 4"', 4"") est monté un circuit de sélection (29) au moyen duquel on peut associer différentes fonctions d'éclairage à une ou plusieurs diodes électroluminescentes (3) d'une plaque support (4, 4', 4", 4"', 4"").
